**Europäisches Patentamt**

**European Patent Office**

**Office européen des brevets**

(11) Veröffentlichungsnummer: **0 215 318**
**B1**

# (12) EUROPÄISCHE PATENTSCHRIFT

(45) Veröffentlichungstag der Patentschrift:
**07.02.90**

(51) Int. Cl.⁴: **F16L 39/04**, F01P 3/10

(21) Anmeldenummer: **86111497.3**

(22) Anmeldetag: **19.08.86**

(54) **Rohrgelenkhebel.**

(30) Priorität: **19.09.85 CH 4066/85**

(43) Veröffentlichungstag der Anmeldung:
**25.03.87 Patentblatt 87/13**

(45) Bekanntmachung des Hinweises auf die Patenterteilung:
**07.02.90 Patentblatt 90/6**

(84) Benannte Vertragsstaaten:
**DE FR GB IT NL**

(56) Entgegenhaltungen:
**DE-A- 2 440 637**
**FR-A- 1 199 910**
**NL-C- 8 372**
**US-A- 3 990 731**

(73) Patentinhaber: **GEBRÜDER SULZER
AKTIENGESELLSCHAFT, Zürcherstrasse 9,
CH-8401 Winterthur(CH)**

(72) Erfinder: **Rufer, Kurt, Obermoosstrasse 15,
CH-8355 Aadorf(CH)**

(74) Vertreter: **Sparing Röhl Henseler Patentanwälte
European Patent Attorneys, Rethelstrasse 123,
D-4000 Düsseldorf 1(DE)**

## Beschreibung

Die Erfindung betrifft einen Rohrgelenkhebel, insbesondere für die Schmierung hin- und herbewegter Teile einer Brennkraftmaschine, mit wenigstens zwei über einen hohlen Gelenkzapfen schwenkbar verbundenen Rohren.

Bei bisherigen Rohrgelenkhebeln ist der hohle Gelenkzapfen mit einem Rohr in seiner Mitte fest verbunden, während der Gelenkzapfen an beiden Enden offen ist und in zwei endseitigen, jeweils mit einem Rohr verbundenen Gelenkbüchsen läuft. Dieser Stand der Technik wie z.B. in der FR-A 1 199 910 erwähnt, weist jedoch den Nachteil auf, dass auf die endseitigen Gelenkbüchsen erhebliche axiale Druckkräfte wirken, wodurch eine Spreizwirkung auf die endseitigen Rohre ausgeübt wird und unter Umständen Undichtheit entstehen kann.

Aufgabe der Erfindung ist es, den eingangs genannten Rohrgelenkhebel so zu verbessern, dass eine Undichtheit mit Sicherheit vermieden wird.

Zur Lösung dieser Aufgabe dienen die im Kennzeichen von Anspruch 1 aufgeführten Merkmale. Die Unteransprüche betreffen vorteilhafte Weiterbildungen.

Hierdurch lässt sich erreichen, dass auf die Dichtungen im wesentlichen nur radiale Kräfte wirken, so dass Undichtheit mit Sicherheit vermieden wird.

Nach einer besonders vorteilhaften Ausführung der Erfindung kann dabei der Gelenkzapfen zwei voneinander getrennte Hohlräume mit jeweils zugeordneten Radialbohrungen aufweisen, wobei die Gelenkbüchse über wenigstens zwei getrennte Umfangsnuten mit entsprechenden Radialbohrungen der Hohlräume kommuniziert, wobei ferner jeder Nut ein Rohr zugeordnet und an der Gelenkbüchse befestigt ist, derart, dass wenigstens zwei voneinander getrennte Fluidströme gewährleistet sind.

Dabei können die Fluidströme erhebliche Druckunterschiede aufweisen, ohne irgendwelchen ungünstigen Einfluss auf die Laufeigenschaften des Rohrgelenkhebels.

Die nähere Erläuterung der Erfindung erfolgt anhand von Ausführungsbeispielen in Verbindung mit nachstehender Zeichnung. Es zeigen:

Fig. I eine Ansicht, teilweise im Schnitt einer ersten Ausführungsform der Erfindung,

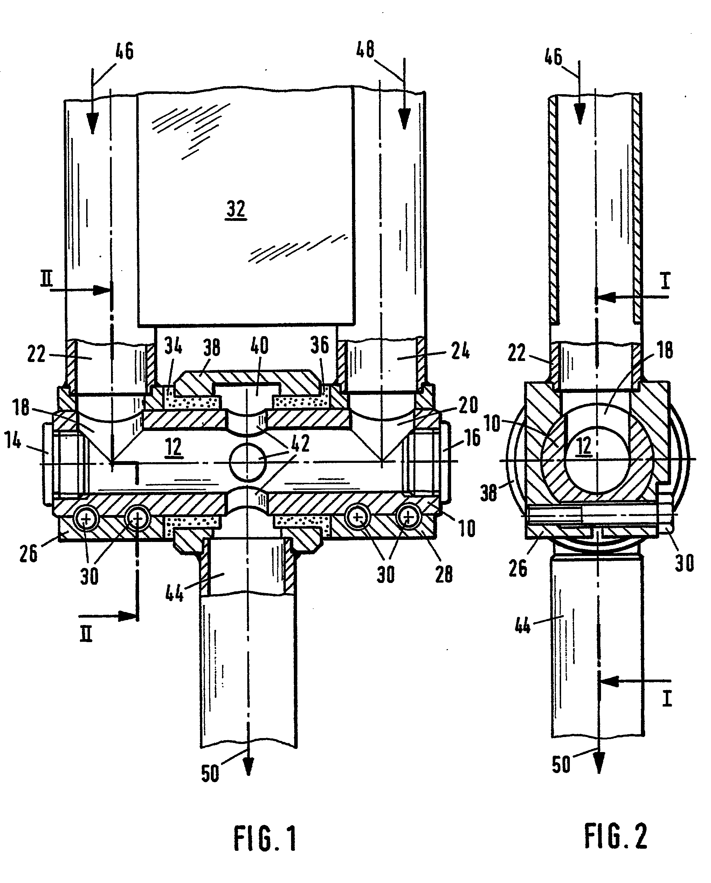

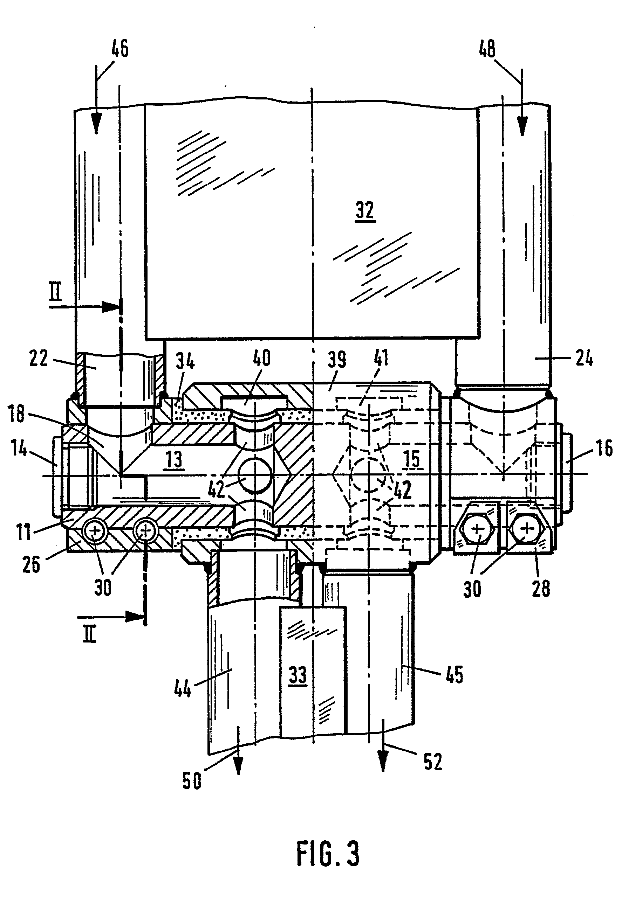

Fig. 2 den Schnitt gemäss Linie II-II in Fig. I,
Fig. 3 eine zweite Ausführungsform der Erfindung.

Ein Gelenkzapfen IO (Fig. I) mit einer durchgehenden Axialbohrung I2 ist endseitig durch Gewindeverschlüsse I4, I6 abgedichtet und über endseitige Radialbohrungen I8, 20 mit Rohren 22, 24 über Schraubklemmflanschen 26, 28 verbunden, deren Schrauben mit 30 bezeichnet sind. Die Rohre 22, 24 sind über eine Platte 32 miteinander verschweisst.

Auf dem Gelenkzapfen IO ist zwischen den Rohren 22, 24 über zwei Lager- und Dichtungsbüchsen 34, 36 eine Gelenkbüchse 38 mit einer Umfangsnut 40 gelagert. Diese kommuniziert über Radialbohrungen 42 mit der Axialbohrung I2 des Gelenkzapfens

IO. An der Gelenkbüchse 38 ist ein mit der Umfangsnut 40 kommunizierendes Rohr 44 befestigt. Das Rohr 44 kann somit im Verhältnis zu den Rohren 22, 24 geschwenkt werden.

Beim Betrieb wird ein flüssiges oder gasförmiges Medium, z.B. Schmieröl, gemäss Pfeilen 46, 48 durch die Rohre 22, 24 zugeführt, wonach es die Bohrungen I8, 20, I2, 42, sowie die Umfangsnut 40 durchströmt und gemäss Pfeil 50 das Rohr 44 verlässt.

Das Ausführungsbeispiel nach Fig. 3 entspricht dem obenbeschriebenen, mit dem Unterschied, dass der Gelenkzapfen II zwei voneinander getrennte Axialbohrungen I3, I5 aufweist, welche mit zwei getrennten Umfangsnuten 40, 4I der Gelenkbüchse 39 kommunizieren. Der Umfangsnut 4I ist dabei ein zusätzliches Rohr 45 zugeordnet, welches über eine Platte 33 an das Rohr 44 angeschweisst ist.

Beim Betrieb sind die Fluidströme gemäss den Pfeilen 46, 50 bzw. 48, 52 völlig getrennt. Sie können dabei sehr unterschiedliche Drücke aufweisen, ohne irgendwelchen nachteiligen Einfluss auf das Betriebsverhalten, wie z.B. Klemmen oder Schrägstellen der beweglichen Teile. Insbesondere werden nachteilige Axialkräfte auf die Lager vermieden.

Es versteht sich, dass die Medien in verschiedenen Phasen vorliegen können, wie z.B. Schmieröl und Dampf. Auch pulverförmige Medien können transportiert werden.

## Patentansprüche

1. Rohrgelenkhebel, insbesondere für die Schmierung hin- und herbewegter Teile einer Brennkraftmaschine, mit wenigstens zwei über einen hohlen Gelenkzapfen schwenkbar verbundenen Rohren, dadurch gekennzeichnet, daß der Gelenkzapfen an jedem Ende mit wenigstens einem Rohr fest verbunden ist, daß auf dem Gelenkzapfen zwischen den endseitigen Rohren eine Gelenkbüchse gelagert ist, wobei radiale Bohrungen im Gelenkzapfen mit wenigstens einer in Umfangsrichtung verlaufenden Nut der Gelenkbüchse kommunizieren, daß an der Gelenkbüchse wenigstens ein mit der Nut kommunizierendes Rohr befestigt ist, und daß zwischen dem Gelenkzapfen und der Gelenkbüchse wenigstens eine Lager- und/oder Dichtungsbüchse vorgesehen ist.

2. Rohrgelenkhebel nach Anspruch 1, dadurch gekennzeichnet, daß der Gelenkzapfen wenigstens zwei voneinander getrennte Hohlräume mit jeweils zugeordneten Radialbohrungen aufweist, daß die Gelenkbüchse über wenigstens zwei getrennte Umfangsnuten mit entsprechenden Radialbohrungen der Hohlräume kommuniziert, und daß jeder Nut ein Rohr zugeordnet und an der Gelenkbüchse befestigt ist, derart, daß wenigstens zwei voneinander getrennte Fluidströme gewährleistet sind.

3. Rohrgelenkhebel nach Anspruch 2, dadurch gekennzeichnet, daß die beiden Rohre der getrennten Fluidströme je an ein separates Drucksystem angeschlossen sind, wobei die Drucksysteme unterschiedlichen Druck aufweisen.

4. Rohrgelenkhebel nach Anspruch 1, dadurch gekennzeichnet, daß die Rohre am Gelenkzapfen mittels Schraubenklemmflanschen befestigt sind.

5. Rohrgelenkhebel nach Anspruch 1, dadurch gekennzeichnet, daß der Gelenkzapfen endseitig durch Gewindeverschlüsse abgedichtet ist. .

## Claims

1. Tubular hinged joint, in particular for lubricating reciprocating parts of an internal combustion engine, comprising at least two tubes which are pivotably connected by a hollow hinge pin, characterised in that the hinge pin is firmly connected at each end to at least one tube, that a pivot bush is mounted on the hinge pin between the tubes at the ends, with radial bores in the hinge pin communicating with at least one peripheral groove in the pivot bush, that at least one tube, which communicates with the groove, is secured to the pivot bush, and that at least one bearing and/or sealing bush is provided between the hinge pin and the pivot bush.

2. Tubular hinged joint according to claim 1, characterised in that the hinge pin comprises at least two separate cavities with respective associated radial bores, that the pivot bush communicates via at least two separate peripheral grooves with corresponding radial bores in the cavities, and that a tube is associated with each groove and secured to the pivot bush in such a way as to ensure that there are at least two separate fluid flows.

3. Tubular hinged joint according to claim 1, characterised in that the two tubes for the separate fluid flows are in each case connected to a separate pressure system, the pressures of these pressure systems being different.

4. Tubular hinged joint according to claim 1, characterised in that the tubes are secured to the hinge pin by means of screw clamp flanges.

5. Tubular hinged joint according to claim 1, characterised in that the hinge pin is sealed at the ends by threaded closures.

## Revendications

1. Levier d'articulation de tubes, en particulier pour le graissage de pièces se déplaçant dans un mouvement de va-et-vient, d'un moteur à combustion interne, comportant au moins deux tubes pivotants par un pivot d'articulation creux, caractérisé en ce que le pivot d'articulation est assemblé de manière fixe à chaque extrémité, à au moins un tube, en ce qu'une boîte d'articulation est montée sur le pivot d'articulation, entre les tubes terminaux, des perçages radiaux pratiqués dans le pivot d'articulation communiquant avec au moins une rainure péripérique de la boîte d'articulation, en ce qu'au moins un tube communiquant avec la rainure est fixé sur la boîte d'articulation, et en ce qu'il est prévu au moins un coussinet de palier et/ou d'échanchéité entre le pivot d'articulation et la boîte d'articulation.

2. Levier d'articulation de tubes selon la revendication 1, caractérisé en ce que le pivot d'articulation comporte au moins deux cavités séparées l'une de l'autre avec des perçages radiaux associés, en ce que la boîte d'articulation communique avec des perçages radiaux correspondants des cavités, par au moins deux rainures périphériques séparées, et en ce qu'un tube est associé à chaque rainure et fixé sur la boîte d'articulation de telle sorte qu'il soit garanti au moins deux courants de fluide séparés l'un de l'autre.

3. Levier d'articulation de tubes selon la revendication 2, caractérisé en ce que les deux tubes des courants de fluide séparés sont raccordés chacun à un circuit de pression séparé, les circuits de pression présentant une pression différente.

4. Levier d'articulation de tubes selon la revendication 1, caractérisé en ce que les tubes sont fixés sur le pivot d'articulation, au moyen de brides de serrage à vis.

5. Levier d'articulation de tubes selon la revendication 1, caractérisé en ce que le pivot d'articulation est rendu étanche à ses extrémités par des fermetures filetées.

**FIG.1**

**FIG.2**

FIG. 3